# FASCICULE DE BREVET EUROPEEN

(11) **EP 0 446 261 B1**
(45) Date de publication et mention de la délivrance du brevet: **18.09.1996**
(21) Numéro de dépôt: 90900204.0
(22) Date de dépôt: 30.11.1989
(51) Int. Cl.: G11B 23/30, G11B 23/03

(54) **DISQUETTE PERFECTIONNEE**
PLATTENEINHEIT
IMPROVED DISC UNIT

(30) Priorité: 30.11.1988 FR 8815673; 31.05.1989 FR 8907151
(43) Date de publication de la demande: 18.09.1991
(73) Titulaire: VERNOIS, Goulven Jean Alain, F-78140 Vélizy (FR)
(72) Inventeur: VERNOIS, Goulven Jean Alain, F-78140 Vélizy (FR)
(86) Numéro de dépôt international: FR8900624
(87) Numéro de publication internationale: WO9006579

(56) Documents cités:
- EP-A- 0 206 897
- EP-A- 0 265 167
- EP-A- 0 266 101
- EP-A- 0 275 657
- BE-A- 0 871 596
- PATENT ABSTRACTS OF JAPAN, Vol. 12, No. 300 (P-745) (3147), 16 Aout 1988; & JP- A-6371993
- PATENT ABSTRACTS OF JAPAN, Vol. 8, No. 159 (P-289) (1596), 24 Juillet 1984; & JP-A-5956267
- PATENT ABSTRACTS OF JAPAN, Vol. 9, No. 133 (P-362) (1856), 8 Juin 1985; & JP-A- 6015880
- PATENT ABSTRACTS OF JAPAN, Vol. 12, No. 264 (P-734) (3111), 23 Juillet 1988; & JP-A-6348677

## Description

### CHAMP DE L'INVENTION

Les pertes financières considérables causées par le piratage des logiciels, le manque de confidentialité des fichiers et la pollution par les virus informatiques sont devenues assez importantes pour mettre en péril la survie d'entreprises.

### ETAT DE L'ART ANTERIEUR

Les solutions apportées à ces problèmes sont logicielles et/ou matérielles. On introduit en particulier des protections logicielles internes qui interdisent en principe le fonctionnement sans la connaissance de clefs, et/ou la copie. Mais dans leur principe même, ces protections sont irréalistes contre qui possède la disquette.

On a préconisé aussi l'emploi de clefs physiques constituées d'une "boite noire" que l'on dispose par exemple sur un port extérieur et qui est interrogé par la disquette via l'unité centrale. Le prix en est élevé et l'usage incommode.

Avec l'apparition des cartes à puces, ou "IC CARD", on a souvent préconisé l'association de cartes à puces et de mémoires de masse, la carte à puce étant soit indépendante et lue par un lecteur indépendant du lecteur de mémoire de masse, soit, dans un cas particulier, (P.A.J. vol 12, N° 264,(p-734)(31111) du 23/⌀7/88), fixée sur la mémoire de masse et lue par un dispositif approprié du lecteur de mémoire de masse.

L'usage de la carte à puce présente un inconvénient important pour l'utilisateur qui est l'utilisation de deux objets différents, de tailles différentes, et devant être pratiquement stockés séparément avec des risques graves de perte ou de confusion et l'exigence d'une manipulation supplémentaire.

Dans le but d'obtenir un accès instantanné au catalogue de la mémoire de masse on a proposé l'intégration à ces mémoires de masse de circuits intégrés dans lesquels est mémorisé le catalogue de la mémoire de masse.

Les brevets E.P-A-0̸ 275 657 et E.P-A-0̸ 266 10̸1, décrivent de telles mémoires de masse munies de circuits intégrés, de conducteurs et de connecteurs noyés dans la matière du boitier, ou liés définitivement à la surface interne ou externe du boitier.

Dans le brevet français N°88 0̸8234 a été proposé l'usage de tels circuits intégrés comme élément de sécurité des mémoires de masse , à disque ou à bande.

Dans tous ces dispositifs, le module est lié intimement à l'enveloppe de la mémoire de masse.

Cette contrainte rend peu pratique ou même problématique l'usage courant d ' une copie de sauvegarde et/ou l'usage d'un fichier réparti sur plusieurs mémoires de masse dès que le logiciel exige pour fonctionner la présence du dispositif électronique.

### BUT ET AVANTAGES DE L'INVENTION.

Le but de l'invention est de permettre l'usage de tels dispositifs électroniques comportant des algorythmes de codage ou de sécurité, associés à la mémoire de masse, tout en conservant la possibilité de faire des copies de sauvegarde d'usage courant, et d'utiliser des logiciels répartis sur plusieurs supports de masse, sans avoir les inconvénients de la carte à puce.

L'invention permet, comme la carte à puce, de dissocier les supports de masse des modules, de façon à permettre le développement indépendant de modules de capacités et de prix différents pouvant être disposés, lorsque le besoin s'en fait sentir, sur des mémoires de masse très standardisées dont le prix n'exéderait pas de façon significative le prix du support de masse équivalent non aménagé.

L'invention permet d'augmenter de façon importante la sécurité de la disquette, au même titre qu'une carte à puce indépendante, en séparant physiquement et en stockant éventuellement en des endroits différents, le support de masse et son ou ses modules.

L'invention permet le regroupement sur un support unique et/ou la connection directe de deux ou plusieurs modules issus de disquettes différentes, et l'utilisation de façon pratique des logiciels utilisant plusieurs supports de masse .

L'invention permet, en liant provisoirement le module et la mémoire de masse, sans modification extérieure de celle ci, d'assurer le rangement simultané de la mémoire de masse et de son module dans les moyens de rangement particuliers à ce support, et permet donc une grande sécurité de rangement minimisant les pertes, les confusions et les recherches.

### SOMMAIRE DE L'INVENTION.

Le but de l'invention est atteint en aménageant des disquettes ou d'autres mémoires de masse, de façon à recevoir, après leur fabrication définitive, et de la part d'un utilisateur, soit de manière irréversible et robuste, soit de manière amovible, un ou plusieurs modules M constitués de circuits intégrés, microprocesseurs, mémoires mortes ou vives, connecteurs, et dispositifs d'entrée de données, de visualisation et d'alimentation, et ceci de façon à ce que le dit support de masse puisse être utilisé avec ou sans le ou les dits modules.

On entend par connecteur, tout dispositif pouvant émettre ou recevoir une énergie ou une information par quelque moyen que ce soit.

Le but de l'invention est plus particulièrement atteint en aménageant de cette façon des mémoires de masse de types existants actuellement qui pourront alors être utilisés sur les lecteurs existants ou sur des lecteurs perfectionnés prenant en compte les modules mais pouvant lire également les mémoires de type ancien.

Le but de l'invention est complémentairement atteint en disposant dans le lecteur de la mémoire de masse, ou indépendament de lui, des connecteurs pouvant entrer en contact avec les connecteurs du module et établissant une liaison entre le module M et l'unité centrale de l'ordinateur .

Le but de l'invention est complémentairement atteint en disposant plusieurs modules sur un dispositif pouvant être connecté à une tête de connexion.

### DESCRIPTION DES FIGURES

Les figures 1 à 10̸ montrent des logements aménagés pour recevoir des modules.

Les figures 6 et 7 montrent plus particulièrement des logements pratiqués dans une disquette de 3 1/2 pouces dans le coin biseauté, et pouvant être recouverts et protégés par le volet mobile agrandi 23A.

Les figures 11 et 12 montrent des modules disposés dans leurs logements sur les disquettes classiques de 3 1/2 et 5 1/4 pouces.

La figure 13 montre une vue d'ensemble, disquette avec logement, module hors de son logement et tête de connexion.

La figure 14 montre une réalisation où la tête de connexion est mobile sur la face avant du lecteur de la mémoire de masse, de façon à se connecter à l'arrière de la disquette.

Les figures 15 et 16 sont relatives au groupeur de modules.

### DESCRIPTION DETAILLEE.

Nous entendons par logement d'un module, une disposition matérielle de l'enceinte de la mémoire de masse, et en particulier des disques et disquettes, qui est réalisé dans le but d'y introduire par la suite et à la convenance de l'utilisateur, un module M, la présence de ce logement ne modifiant pas les possibilités anciennes de la mémoire de masse.

Nous allons décrire, à titre d'exemple non limitatif de l'invention, des logements aménagés dans le boîtier de mémoires de masse, et les dispositions des modules dans ces logements.

Les différents types de logements qui vont être décrits peuvent se trouver aux différents endroits possibles et pour les différents types de disquettes ou disques durs et autres supports de masse.

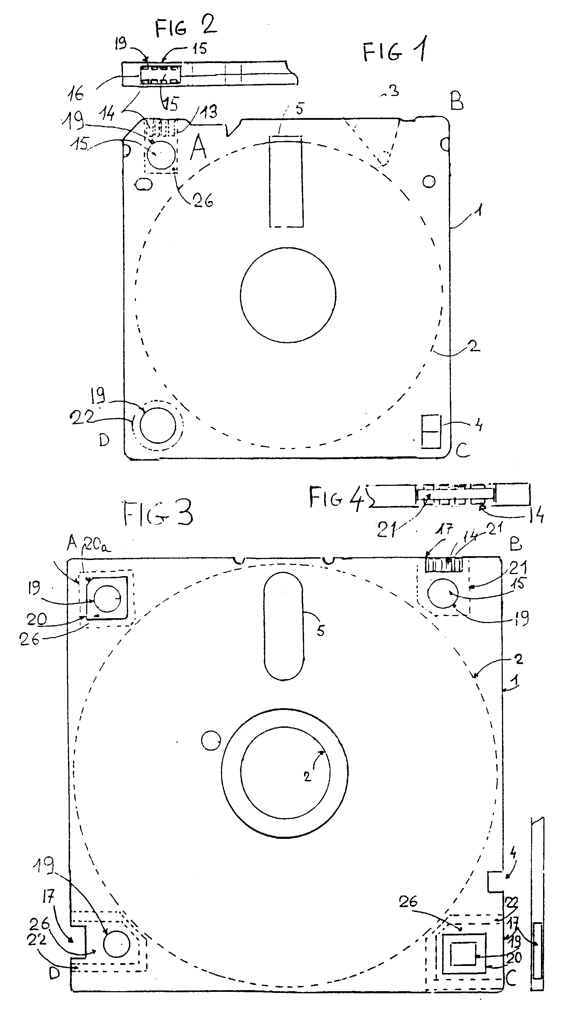

Les figures 1 et 2 montrent en A un logement accessible par le bord du boîtier et disposant de deux trous 19 de ventilation. Le module est collé ou maintenu grace aux trous de ventilation adaptés à la forme de la puce 15 et à l'élasticité des parois du boîtier.

La figure 3 montre en B et D un logement 26 précédé d'une échancrure 17 et disposant éventuellement d'une entretoise 22 assurant l'étanchéité en l'absence du module. Ce logement laisse apparents les contacts 14 du module qui peut être collé ou maintenu par la disposition des trous 19, des puces 15 et l'élasticité des parois du boîtier.

On voit en A un logement 26 constitué par l'espace compris entre les plans des parois du boîtier et l'entretoise 22, et possédant deux trous de tailles et éventuellement de formes différentes. Le trou 20̸ possédant un repère 20̸a est plus grand que le trou 19. Le module est collé sur la face interne de la paroi inférieure, la puce étant logée dans le trou 19 de cette paroi dont l'épaisseur est éventuellement augmentée de l'épaisseur d'une entretoise 22.

Le module peut avoir une surface autocollante de façon à se fixer simplement sur la disquette. Les colles actuelles sont suffisament efficaces pour que, soit le module ne puisse pas être retiré sans détérioration, de facon à le rendre inséparable de la disquette, ou soit au contraire qu'il puisse être suffisament décollable de façon à pouvoir être transporté sur une autre disquette en cas de détérioration de la première.

On voit figure 3 en C et figures 8, 9, et 10̸ un logement constitué d'une ouverture 17 sur le bord du boitier, une entretoise 22 ménageant un espace 26 entre les deux faces, dont l'une a un trou 20̸ et l'autre un trou 19 permettant de ventiler la puce.

Le module s'introduit par l'ouverture 17 du bord du boitier. Il est positionné par l'entretoise 22, le trou 19 qui accepte la puce et le trou 20̸ qui laisse apparaître les connecteurs et éventuellement une face de la puce.

Le module est fixé par collage, ou par un ruban adhésif qui obture l'orifice 17 en maintenant le module dans son logement, ou par un volet 17a solidaire de la paroi du boitier, ou par un volet 17a indépendant.

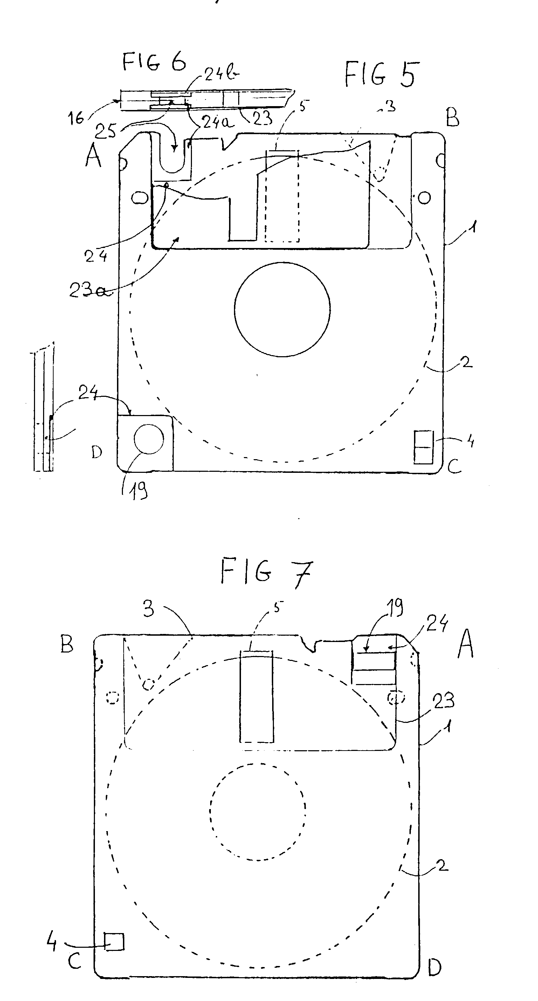

La figure 5 montre en A un logement 24/25 formé par une échancrure 25 du boitier à la quelle sont associés deux évidemments plats 24a et 24b. La puce se loge dans l'échancrure 25, les connecteurs 14 sur l'évidement 24a par exemple et le radiateur de la puce sur l'autre évidement 24b.

De cette façon, le module s'emboite dans son logement.

Le module peut être protégé par le volet d'occultation de la fenêtre, allongé en conséquence 23a.

La figure 5 montre en D un logement 19/24 formé d'un trou 19 et d'un évidement 24. La puce se loge dans le trou 19 et est ventilé par la face opposée. Les connecteurs se logent dans l'évidement 24.

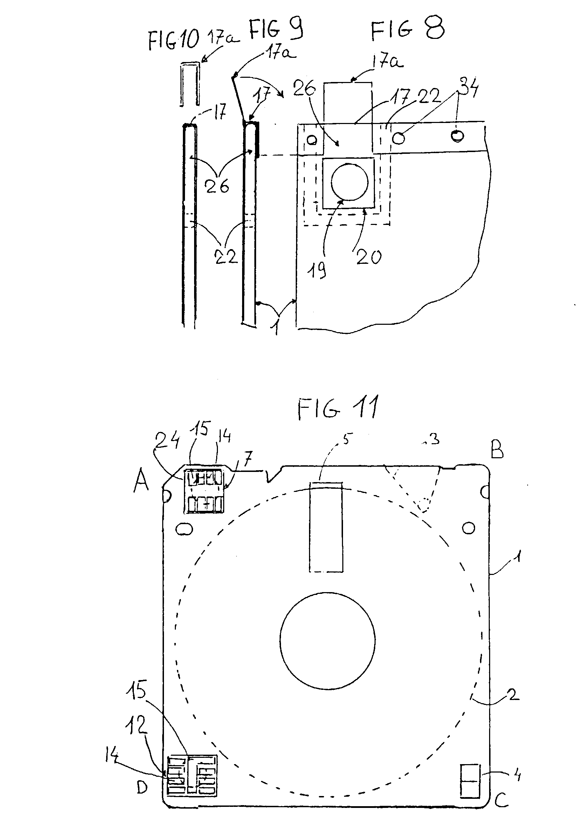

La figure 7 montre en A un logement 19/24 constitué par un trou 19 recevant la puce et un évidement 24 recevant les connecteurs. Il laisse libre le coin supérieur droit A, coupé à 45 degrés.

Les modules sont solidarisés au boitier par collage, soudure, vissage, rivetage, emboitage, enclipsage ou toutes autres méthodes assurant leur fixation définitive ou leur amovibilité.

Les figures 5, 7, 11 et 13 montrent une disquette de 3 1/2 pouces à titre d'exemple.

Sur la figure 11, un module 7 à huit contacts identiques est dans le coin A, les connecteurs 14 apparaissant en surface et la puce 15 apparaissant sur l'autre face à travers un trou 19 qui permet sa ventilation. Le module est collé à plat dans un logement 24, soit suffisament en retrait de la surface principale de façon à ce que les connecteurs 14 puissent être recouverts sans contact par le volet d'obturation prolongé 23a de la fenêtre de lecture, soit légèrement en retrait pour que les connecteurs 14 affleurent la surface normale du boitier . Dans le cas de figure, les connecteurs sont paralleles à la fenêtre de lecture.

Un module 12 en D, identique à ceux des PTT, a ses connecteurs perpendiculaires à la fenêtre sur cette figure.

Les figures 3, 8 et 12 représentent une disquette de 5 1/4 pouces à boitier souple en carton ou en plastique. On voit en A un module 8 à seize connecteurs 14 ronds, en B un module 10̸ à seize connecteurs rectangulaires, à puce ronde apparaissant sur les deux faces pour assurer un meilleur refroidissement.

On voit, figures 1 et 2 une disquette 3 1/2 pouces dans laquelle est intégré un module 13 dont les huits connecteurs 14 sont face à face à l'intérieur du boitier. La puce 15 est visible des deux cotés par des trous 19 qui assurent sa ventilation et le module peut être recouvert par le volet prolongé 23a non représenté.

La figure 3 représente une disquette de 5 1/4 pouces. Un module 21 est glissé par une échancrure 17 à l'intérieur du boitier 1. Les connecteurs sont apparents dans l'échancrure 17 sur les deux faces du module 21. Soit il y a n connecteurs 14 par face, ce qui fait 2n connecteurs pour le module, soit les n connecteurs coiffent en cavaliers l'extrémité du module, ce qui fait n connecteurs par module.

La figure 4 représente un module de deux fois quatre connecteurs. Les puces sont apparentes dans les trous 19. Les modules sont solidarisés au boitier par collage.

Ces exemples sont donnés à titre indicatif et ne sont nullement limitatifs.

Il est évident que les modules montrés ici dans des emplacements particuliers peuvent se trouver partout où se trouve une place suffisante et dans tous les types de disquettes ou de disques durs, et qu'il peut y avoir plus d'un module par disquette ou disque dur.

Nous décrirons plus particulierement l'aménagement, suivant l'invention, du coin droit avant de la disquette de 3 1/2 pouces, et nous décrirons l'aménagement du volet de cette disquette et les amenagements à apporter au lecteur de ces disquettes pour être adapté à ces dites disquettes.

Le volet d'obturation 23a de la disquette de 3 1/2 pouces est prolongé, suivant l'invention, vers la droite pour recouvrir et protéger les connecteurs d'un module lui même placé dans ce coin droit. FIG 3, 5 (où la disquette est représentée par sa face dorsale, la droite de la disquette devenant la gauche de la figure), et 7.

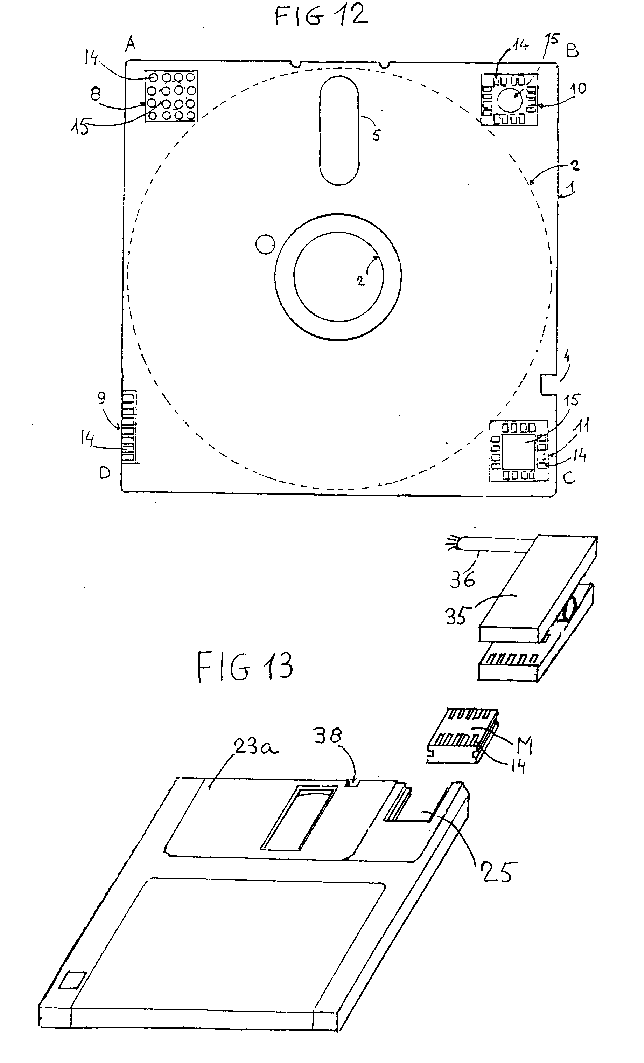

Un évidement 38 sur le bord avant du volet, figure 13, permet, suivant l'invention, la prise du levier de déplacement du dit volet.

Le lecteur de disquettes devant, suivant l'invention, pouvoir lire les disquettes anciennes et nouvelles, l'évidement 38 se trouve placé où serait le bord du volet non modifié, pour permettre à l'extrémité du levier de se loger indifféremment dans le dit évidement 38 ou sur le coté du volet standard.

Il existe sur les lecteurs de 3 1/2 pouces un dispositif contrôlant le verrouillage et l'éjection de la disquette et prenant appui sur le bord avant de la disquette au niveau des éventuels connecteurs. Ce dispositif sera déplacé ou modifié suivant les règles de l'art de façon à ce qu'il ne détériore pas les connecteurs et ne gène pas le déplacement du volet prolongé suivant l'invention.

La liaison entre le module M et l'ordinateur est assurée par une tête de connexion 35 liée au lecteur de disquettes ou indépendante, et reliée au bus de l'ordinateur par un bus 36. Fig 13.

Pour permettre l'utilisation indifférente de disquettes normales et de disquettes avec module, dans le cas où la tête de connexion pénètre dans un logement de la disquette, logement qui n'existe pas dans une disquette normale, la dite tête de connexion peut reculer suffisamment, suivant l'invention, pour que la disquette sans logement puisse se positionner correctement; un ressort retenant la dite tête assure la pénétration de cette dite tête dans le logement de la disquette, dans le cas où ce logement existe.

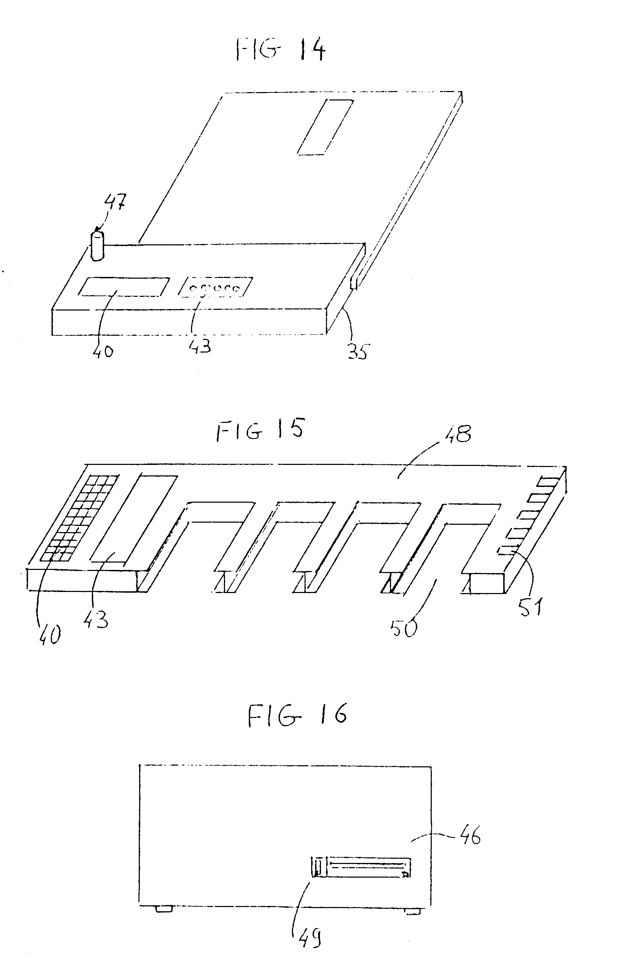

Pour permettre à la tête de connexion 35 de se connecter aux connecteurs du module se trouvant sur la dite partie arrière de la disquette, la dite tête de connexion est, Fig 14, disposée mobile sur la face avant 46 du lecteur de mémoire de masse ou de l'ordinateur, et éventuellement en partie ou en totalité à l'extérieur du dit lecteur, de façon à pouvoir se positionner sur la partie arrière de la disquette.

Elle peut posséder un clavier 43, un écran 40̸, et une pile ou une cellule solaire.

Cette tête de connexion mobile sera reliée au lecteur par un moyen mécanique approprié, arbre 47, glissière, ou tout autre dispositif connu.

Dans le cas où la présence du module serait nécessaire durant toute la séance de travail, et que ce travail exigerait la présence de plusieurs disquettes et donc de plusieurs modules, les modules peuvent être, suivant l'invention, réunis sur un support 48, que nous appèlerons groupeur, pouvant s'adapter à la tête de connexion normale, ou se positionner dans une tête de connexion particulière, pouvant se trouver à l'extérieur du lecteur de disquettes ou de l'ordinateur, ou à l'intérieur et accessible par une ouverture 49 de forme appropriée. Fig 16.

Le groupeur 48 peut être constitué, suivant l'invention, par un profilé en forme d'U dont les jambes peuvent être munies d'évidements 50̸ permettant de saisir les modules, les connecteurs des modules prenant contact avec les connecteurs du groupeur, situés au fond de l'U, ou sur les jambes de l'U, et le groupeur possédant ses propres connecteurs 51 assurant la liaison avec la tête de connexion. Fig 15.

Le groupeur peut être muni, suivant l'invention, d'une pile 41, ou cellule solaire 42, d'un clavier 43 et d'un écran 40̸.

Ces modules peuvent être également, suivant l'invention, associés par interconnexion directe, dans une disposition à étages rappelant les prises électriques enfichables les unes derrière les autres.

Dans une réalisation exemplaire interconnectée des modules, chaque module possède des connecteurs males sur un côté et des connecteurs femelles sur un autre côté, ces connecteurs étant reliés par un bus.

## Revendications

1. Mémoire de masse comprenant un boîtier, et dans un premier logement de ce boîtier un support de mémoire du type disque, et dans un second logement de ce boîtier des éléments semiconducteurs et des connecteurs permettant à ces éléments semiconducteurs de communiquer avec l'extérieur,
caractérisé en ce que les éléments semiconducteurs et les connecteurs sont réunis en un module amovible (M), et en ce que le second logement possède une forme et des dispositions qui permettent l'introduction, le maintien et le retrait du dit module amovible (M).

2. Dispositif selon la revendication 1, caractérisé en ce que la mémoire de masse est une mémoire de masse d'un modèle préexistant, initialement démunie de logement, dont le modèle a été modifié pour être fabriqué avec des logements, mais qui peut être utilisé dans les mêmes conditions que le modèle initial, que les logements soient ou non munis d'un module (M).

3. Dipositif selon la revendication 1, caractérisé en ce que des modules électroniques indépendants (M) munis de connecteurs ont des formes adaptées aux logements des mémoires de masse qui les reçoivent.

4. Dispositif selon la revendication 1 caractérisé en ce que les modules peuvent être connectés à l'ordinateur indépendamment de la mémoire de masse et/ou du lecteur de la mémoire de masse.

5. Dispositif selon la revendication 1 caractérisé en ce que, (figure 3, coin D), un logement limité par une entretoise et les parois de la disquette, et ouvert sur le bord de la dite disquette, est précédé par une échancrure (17) du bord de cette disquette.

6. Dispositif selon la revendication 1 caractérisé en ce que, (figure 5), une disquette possède un logement, constitué par une échancrure (25) et des plats (24A) et (248), situé à proximité du coin de la disquette duquel s'éloigne le volet (23) lors de son ouverure, et pouvant être recouvert par le volet prolongé (23A).

7. Dispositif selon la revendication 1 caractérisé en ce que, (figures 8, 9 et 10̸), dans la disquette de 5 1/4 pouces, un compartiment (26) limité intérieurement par un relief ou par une entretoise (22), possède une échancrure latérale (17) et une ou deux ouverture (19) et (20̸), chacune dans une des deux faces de la disquette et en regard l'une de l'autre, la dite ouverture (17) étant soit réservée dans la fabrication de la disquette par une languette (17a) non collée pouvant se rabattre en obturant la dite ouverture (17), soit par enlèvement de matière, et pouvant alors être obturée par un volet (17a) indépendant, ou un ruban adhésif.

8. Dispositif selon la revendication 1 caractérisé en ce que le volet mobile (23a) de la disquette de 3 1/2 pouces, ou de toute autre mémoire de masse possédant un tel volet ayant été prolongé pour protéger un logement, comporte un évidemment (38) sur le bord avant, débutant à l'emplacement du bord latéral du volet initial non prolongé.

9. Dispositif selon la revendication 1 caractérisé en ce que la tête de connexion (35) est maintenue par un moyen élastique permettant, lors du positionnement de la disquette, le recul de la dite tête lorsqu'il n'y a pas de logement.

10. Groupeur de modules électroniques amovibles tels que définis dans la revendication 1, possédant des logements munis de connecteurs pouvant recevoir de tels modules électroniques amovibles munis de connecteurs se connectant aux connecteurs des logements, possédant un connecteur (51) permettant la connexion avec l'extérieur, et possédant un bus reliant les deux types de connecteurs,
caractérisé en ce que le groupeur peut être introduit dans un lecteur de disquettes par la fente d'introduction des disquettes. ou par une ouverture particulière (49) du lecteur de disquettes ou de l'ordinateur,

11. Dispositif selon la revendication 10̸ caractérisé en ce que les modules (M) sont connectés aux connecteurs des logements du groupeur (48) de la même façon qu'à la tête de connexion normale.

12. Dispositif selon la revendication 10̸ caractérisé en ce que le groupeur (48) est muni d'un clavier, d'un écran de visualisation, d'une pile ou d'une cellule photoélectrique.

13. Dispositif selon la revendication 10̸ caractérisé en ce que un lecteur de mémoire de masse ou un ordinateur possède une tête de connexion différente de la tête de connexion normale, et sur laquelle peut se connecter un groupeur (48).

## Patentansprüche

1. Massenspeicher mit Gehäuse, an einem ersten Einbauplatz dieses Gehäuses ein Speicherträger in Diskettenform und an einem zweiten Einbauplatz dieses Gehäuses halbleitende Schaltelemente und Steckverbindungen, über die die Halbleiter nach außen angeschlossen werden können;
der dadurch gekennzeichnet ist, daß die halbleitenden Schaltelemente und die Steckverbindungen sich zusammen in einem abnehmbaren Modul befinden; der zweite Einbauplatz ist derart geformt und angeordnet, daß der besagte abnehmbare Modul (M) eingeführt, gehalten und herausgenommen werden kann.

2. Vorrichtung gemäß Patentanspruch 1, die dadurch gekennzeichnet ist, daß es sich bei dem Massenspeicher um ein bereits bestehendes Modell handelt, das ursprünglich keinen Einbauplatz besitzt und deshalb verändert wurde, so daß es bei der Herstellung mit Einbauplätzen versehen wird, jedoch unter den gleichen Bedingungen wie das ursprüngliche Modell weiterverwendet werden kann, gleichgültig ob sich ein Modul (M) an den Einbauplätzen befindet oder nicht.

3. Vorrichtung gemäß Patentanspruch 1, die dadurch gekennzeichnet ist, daß die unabhängigen elektronischen Module (M), die mit Steckverbindungen ausgerüstet sind, eine Form aufweisen, die den für sie vorgesehenen Fächern der Massenspeicher angepaßt ist.

4. Vorrichtung gemäß Patentanspruch 1, die dadurch gekennzeichnet ist, daß die Module unabhängig vom Massenspeicher und/oder vom Laufwerk des Massenspeichers an den Computer angeschlossen werden können.

5. Vorrichtung gemäß Patentanspruch 1, die dadurch gekennzeichnet ist, daß (Abb. 3, Ecke D) sich am Diskettenrand eine Aussparung (17) vor einem zum Diskettenrand hin offenen Einbauplatz befindet, der durch einen Abstandhalter und die Diskettenwände abgegrenzt wird.

6. Vorrichtung gemäß Patentanspruch 1, die dadurch gekennzeichnet ist, daß (Abb. 5) eine Diskette mit einem Einbauplatz versehen ist, der aus einer Aussparung (25) und den Vertiefungen (24A) und (24B) gebildet wird; er befindet sich unweit der Diskettenecke, von der sich der Schieber (23) beim Öffnen entfernt, und kann von dem verlängerten Schieber (23A) überdeckt werden.

7. Vorrichtung gemäß Patentanspruch 1, die dadurch gekennzeichnet ist, daß (Abb. 8, 9 und 10) auf einer 5 1/4 Zoll-Diskette ein Einbauplatz (26), der innen durch eine Verdickung oder einen Abstandhalter (22) abgegrenzt ist, mit einer seitlichen Aussparung (17) und mit einer oder zwei sich gegenüberliegenden Öffnungen (19) und (20) auf jeder Diskettenseite versehen ist; für die besagte Aussparung wird entweder bei der Herstellung der Diskette eine nicht festgeklebte Lasche (17a) vorgesehen, die zum Verschließen über die besagte Aussparung geklappt werden kann, oder das Entfernen von Materie, dann könnte die Öffnung durch einen unabhängigen Schieber (17a) oder ein Klebeband überdeckt werden.

8. Vorrichtung gemäß Patentanspruch 1, die dadurch gekennzeichnet ist, daß der bewegliche Schieber (23a) der 3 1/2 Zoll-Disketten oder eines anderen Massenspeichers mit einem solchen Schieber, der zum Abdecken des Einbauplatzes verlängert wurde, eine Vertiefung (38) am vorderen Rand aufweist, die an der Stelle des Seitenrands beginnt, wo sich eingangs der nicht verlängerte Schieber befand.

9. Vorrichtung gemäß Patentanspruch 1, die dadurch gekennzeichnet ist, daß der Anschlußkopf (35) durch ein elastisches Hilfsmittel gehalten wird, wodurch er beim Einlegen der Diskette zurückgezogen wird, wenn kein Einbauplatz vorhanden ist.

10. Sammelbox für die unter Patentanspruch 1 definierten abnehmbaren elektronischen Module, die über Einbauplätze mit Steckverbindungen verfügt, an die solche mit Steckverbindungen ausgestatteten abnehmbaren elektronischen Module angeschlossen werden können. Die Sammelbox besitzt auch eine Steckverbindung (51) für einen Außenanschluß und einen Bus, der die beiden Anschlußarten miteinander verbindet;
Sie ist dadurch gekennzeichnet, daß die Sammelbox durch den Schlitz zum Einlegen von Disketten in ein Diskettenlaufwerk oder durch eine besondere Öffnung (49) des Diskettenlaufwerks oder des Computers eingeführt werden kann.

11. Vorrichtung gemäß Patentanspruch 10, die dadurch gekennzeichnet ist, daß die Module (M) genauso an die Steckverbindungen der Einbauplätze der Sammelbox (48) angeschlossen werden wie an den normalen Anschlußkopf.

12. Vorrichtung gemäß Patentanspruch 10, die dadurch gekennzeichnet ist, daß die Sammelbox (48) mit einer Tastatur, einem Bildschirm, einer Batterie oder einer photoelektrischen Zelle ausgestattet ist.

13. Vorrichtung gemäß Patentanspruch 10, die dadurch gekennzeichnet ist, daß ein Massenspeicher-Laufwerk oder ein Computer über einen Anschlußkopf verfügt, der sich vom normalen Anschlußkopf unterscheidet und an den eine Sammelbox (48) angeschlossen werden kann.

## Claims

1. Mass storage including a cartridge, and in a first housing inside of this cartridge a memory medium of the disk type, and in a second housing of this cartridge semiconductor elements and connectors allowing these semiconductor elements to communicate with the outside world,
characterized by the fact that the semiconductor elements and the connectors are united in a removable module (M), and by the fact that the second housing has a shape and fittings allowing the introduction, the securing and the removal of said removable module (M).

2. Device according to claim 1, characterised by a mass storage of an already existing model, initially without second housing, and which model has been modified to be manufactured with second housing, but can still be used in the same conditions as the initial model, wether or not the housings are fitted with a module (M).

3. Device according to claim 1, characterised by the fact that the independent electronic modules (M) are fitted with connectors and have shapes compatibles with the housing of the mass storage that receive them.

4. Device according to claim 1, characterised by the fact that the modules can be connected to the computer independently of the mass storage and/or the mass storage reader.

5. Device according to claim 1, characterised by the fact that (figure 3, corner D) a housing, limited by a spacer and the side of the disk and open on the edge of this disk, is preceded by an indentation (17) on the edge of the disk.

6. Device according to claim 1, characterised by the fact that (figure 5) a disk has a housing made of an aperture (25) and flats (24A) and (24B), located next to the corner of the disk away from which the movable shutter (23) withdraw at the time it open, being understood that this housing could be covered and protected by an extended shutter (23A).

7. Device according to claim 1, characterised by the fact that (figures 8, 9, and 10̸) on a 5 1/4 inch disk, a housing (26) the inside of which is limited by an embossing or a spacer (22) has a side opening (17) and one or two apertures (19) and (20̸) on each side of the disk and in facing each other, said opening (17) being either provided during the manufacturing process of the disk thanks to a tab (17a) which is not glued and can be folded back to close said opening (17), or created later by stripping of some material, the opening being closed later on either by a movable shutter (17a) or by a adhesive tape.

8. Device according to claim 1, characterised by the fact that the movable shutter (23a) of the 3 1/2 inch disk, or any other mass storage fitted with such shutter which has been extended to protege the housing, is provided with an indentation (38) situated on the forward edge, and beginning where the edge of the initial unextended shutter would have been.

9. Device according to claim 1, characterised by the fact that the connecting head (35) is secured by some elastic device allowing, during the positioning of the disk, the withdrawal of said head if no housing is present.

10. An grouper of removable modules such as defined in claim 1, and having housings fitted with connectors able to receive such removable electronic modules fitted with connectors which connect to the housing connectors, said grouper having a connector (51) allowing connection to the outside world and also having a bus linking the tow types of connectyors,
characterised by the fact that the grouper can be introduced in a disk reader through the disk introducing slot, or through a dedicated opening (49) in the disk reader or computer.

11. Device according to claim 10̸ characterised by the fact that the modules (M) are connected to connectors in the housings of grouper (48) in the same fashion as normal connecting head.

12. Device according to claim 10̸, characterised by the fact that the grouper (48) is fitted with a keyboard, a display, a battery or a photoelectric cell.

13. Device according to claim 10̸, characterised by the fact that a mass storage reader or a computer has a connecting head different from the normal connecting head, and on which a grouper (48) can also be connected.
